# EUROPEAN PATENT APPLICATION

(11) **EP 3 818 910 A1**
(43) Date of publication of application: **12.05.2021**
(21) Application number: 20166654.2
(22) Date of filing: 30.03.2020
(51) Int. Cl.: A47C 7/38

(54) **A HEAD RESTRAINT**

(30) Priority: 06.11.2019 CN 201911075074
(71) Applicant: Guangzhou Huashi Furniture Manufacturing Co., Ltd., Guangzhou, Guangdong Province 510080 (CN)
(72) Inventor: GU, Yingdong, Gongzhuling City, Jilin Province, 136100 (CN); CHEN, Feng, Lianzhou City, Guangdong Province, 513400 (CN)
(74) Representative: Jannig & Repkow Patentanwälte PartG mbB

(57) **Abstract**

The head restraint disclosed in the invention comprises a first bracket (1), a second bracket (3), and an elastic pillow back (2) arranged side by side. The first bracket (1) is connected to one side of the elastic pillow back (2), and the second bracket (3) is connected to the other side of the elastic pillow back (2). The elastic pillow back (2) is made of soft plastic, which gives a cushioned and comfortable feeling to the relying head. The first bracket (1) or/and the second bracket (3) is/are fixed to the chair back, and the second bracket (3) can slide relative to the first bracket (1) and adjust the length of the elastic pillow back (2) from top to bottom, so as to meet the requirements for the comfort of head restraint for people of different heights and different levels. The invention has the advantages of simple structure and novel design.

## Description

### Technical Field

The invention relates to the technical field of tables and chairs in furniture, in particular to a head restraint.

### Technical Background

In the prior art, the head restraint is covered with a sponge or hard plastic in soft cloth, which has the following defects: First, the head restraint is relatively hard, and its users feel uncomfortable when leaning against it; second: the length and bending of the head restraint cannot be adjusted, and the contact area between the head restraint and the head cannot be changed to meet more sitting posture requirements. Also, the bending of the head restraint and the bending of the neck pillow are different after all. If the bending of the head restraint cannot be adjusted, the head restraint cannot be used to replace the neck pillow.

### Summary of Invention

The purpose of the invention is to overcome the disadvantages and deficiencies of the prior art and to provide a soft plastic head restraint with adjustable length and bending.

The purpose of the invention is realized through the following technical scheme: A head restraint comprises: a first bracket, a second bracket, and an elastic pillow back arranged side by side. The first bracket is connected to one side of the elastic pillow back, and the second bracket is connected to the other side of the elastic pillow back. The elastic pillow back is made of soft plastic, and the first bracket or/and the second bracket is/are fixed on the chair back.

In the above embodiment, the second bracket can slide relative to the first bracket and adjust the length of the elastic pillow back.

In the above embodiment, the materials of the elastic pillow back include PVC, ABS, lead stearate, thermoplastic polyurethane elastomer, photocatalyst, nano-silver and compatibilizer.

In the above embodiment, the proportions of the PVC, ABS, lead stearate, thermoplastic polyurethane elastomer, photocatalyst, nano-silver and compatibilizer are 1:0.1:0.45:2:0.01:0.2:3 respectively.

The manufacturing method of the elastic pillow back is as follows:
I. Put 1 portion of PVC, 0.1 portion of ABS and 3 portions of compatibilizer into a blender and stir to form a mixture;
II. Add 2 portions of thermoplastic polyurethane elastomer to the above mixture;
III. Add 0.45 portion of lead stearate and 0.01 portion of photocatalyst to the mixture formed in step 2;
IV. Plate the outside of the mixture formed in step 3 with nano-silver and finally form the shape.

Preferably, an intermediate bracket is provided between the first bracket and the second bracket. The intermediate bracket is fixed on the first bracket, the second bracket is slidably connected with the intermediate bracket, the first bracket has a fixed tab passing through the intermediate bracket, and the second bracket has the first through holes to be buckled with the tab.

In the above embodiment, a movable slot of the second bracket is provided in the middle of the intermediate bracket, two inserted plates are respectively provided on the inner side of the movable slot, and the two sides of the second bracket are respectively provided with a movable groove for the inserted plates.

In the above embodiment, an avoidance space is formed between the first bracket and intermediate bracket for engaging the chair back, and the intermediate bracket are provided with two parallel slots on the sides of the avoidance space.

In the above embodiment, the intermediate bracket is also provided with two second through holes, and the second bracket is provided with a vertical groove corresponding to the second through holes respectively.

In the above embodiment, the head of the tab is spherical and a spring is provided inside the head.

In a preferred embodiment, three steps are provided in the place where the elastic pillow back is in contact with the second bracket. The top of the three steps is provided with a row of clamping slots, the elastic pillow back is provided with fitting steps corresponding to the three steps, and the ceiling of the fitting steps is provided with a projection corresponding to the clamping slot.

Compared with the prior art, the present invention has the following advantages and effects:
First, the elastic pillow back is made of soft plastic, which is elastically stretchable, giving a cushioned and comfortable feeling to the relying head. Also, the first bracket is fixed on the chair back, the height of elastic pillow back can be adjusted by adjusting the height of the entire chair back, and the second bracket can slide relative to the first bracket and adjust the length and expansion of the elastic pillow back, so as to meet the requirements for the comfort of head restraint for people of different heights and different levels.
Second, the materials of the elastic pillow back include PVC, ABS, lead stearate, thermoplastic polyurethane elastomer, photocatalyst, nano-silver and compatibilizer. While improving elasticity and tensile properties, it has bactericidal and anti-oxidant effects.

### Description of Drawings

1-First bracket; 2-Elastic pillow back; 3-Second bracket; 4-Intermediate bracket; 5-Tab; 6-First through hole; 7-Movable slot; 8-Inserted plate; 9-Movable groove; 10-Avoidance space; 11-Slot; 12-Second through hole; 13-Three steps; 14-Clamping slot; 15-Fitting steps; 16-Projection.
- FIG 1: is the overall structural view of head restraint.
- FIG 2: is the breakdown side view of head restraint.
- FIG 3: is the breakdown elevation view of head restraint.
- FIG 4: is the breakdown elevation view of head restraint.
- FIG 5: is the breakdown elevation view of head restraint.

### Specific Embodiments

The present invention is described in further detail below with reference to the embodiments and the accompanying drawings, but the embodiments of the present invention are not limited thereto.

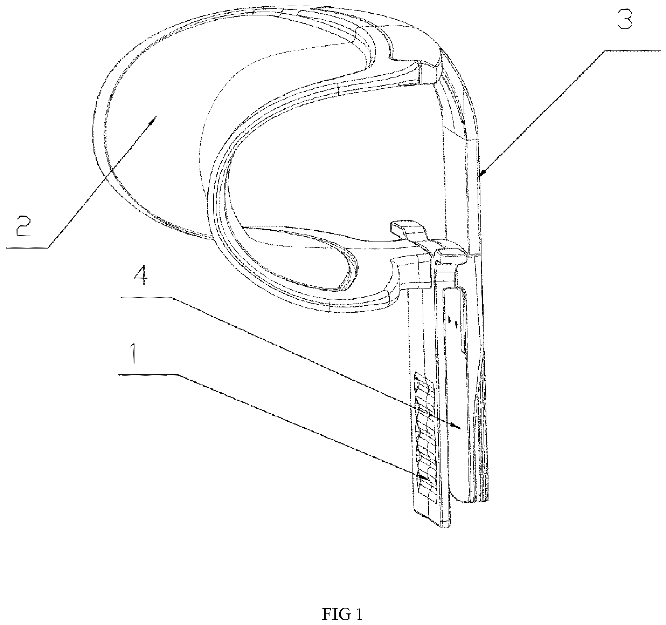

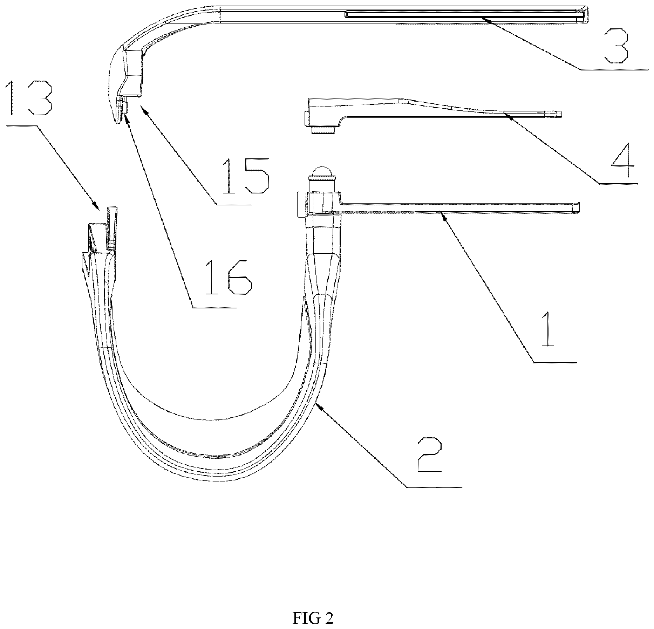

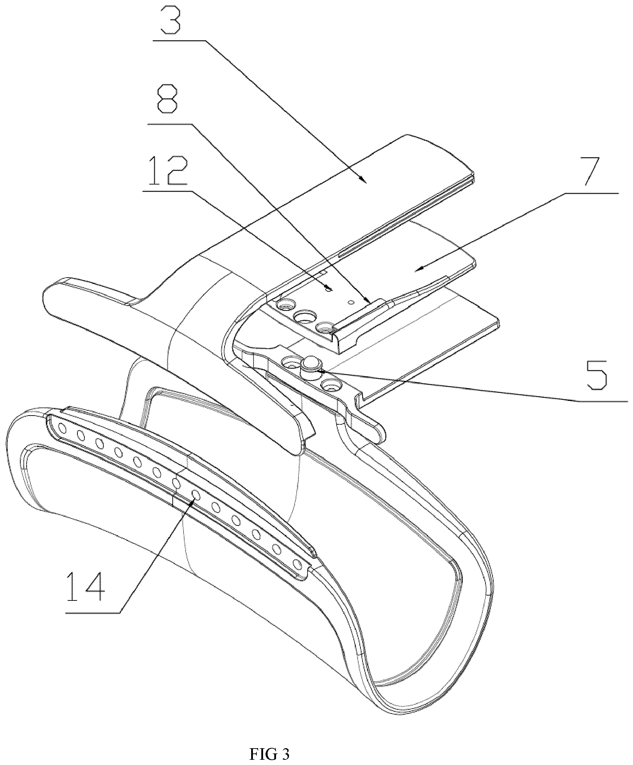

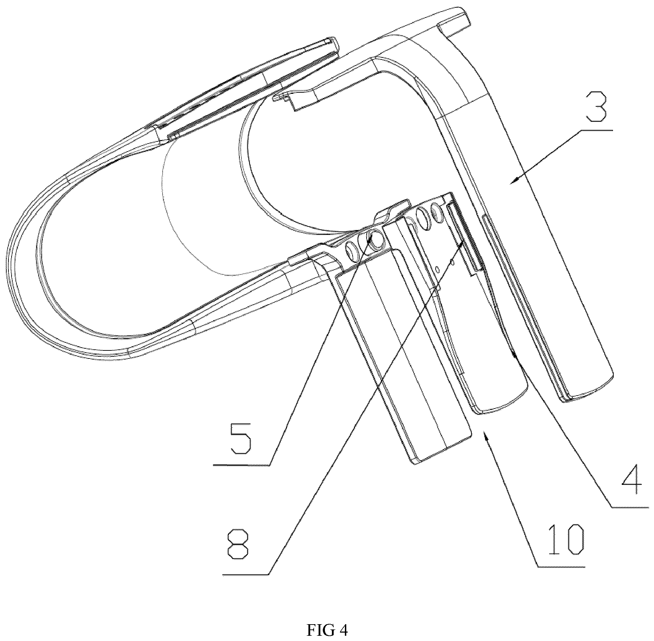

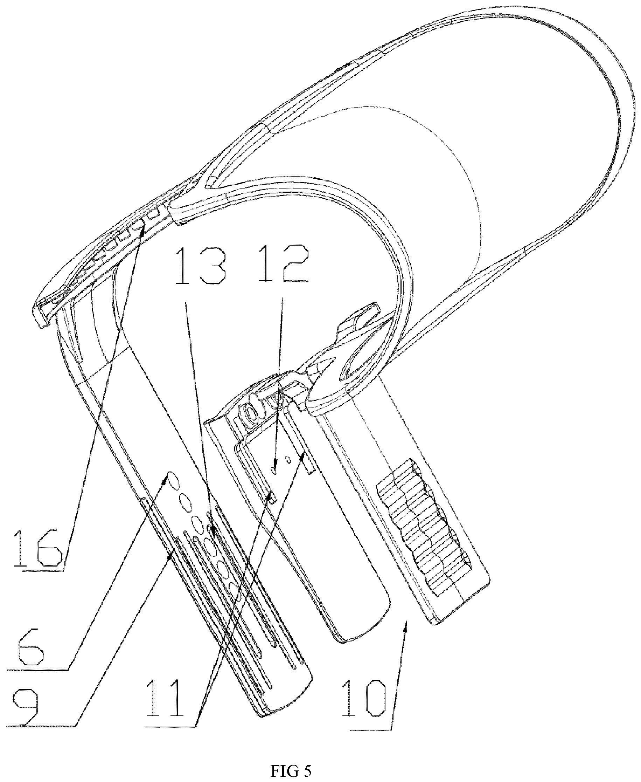

As shown in FIG 1-FIG 5, the head restraint comprises: a first bracket 1, a second bracket 3, and an elastic pillow back 2 arranged side by side. The first bracket 1 is connected to one side of the elastic pillow back 2, and the second bracket 3 is connected to the other side of the elastic pillow back 2. The elastic pillow back 2 is made of soft plastic, which is elastically stretchable, giving a cushioned and comfortable feeling to the relying head. The first bracket 1 or/and the second bracket 3 is/are fixed on the chair back (not shown in the figure), and the height of elastic pillow back 2 can be adjusted by adjusting the height of the entire chair back. The first bracket 1 is fixed on the chair back, the second bracket 3 can slide relative to the first bracket 1 and adjust the length and expansion of the elastic pillow back 2, so as to meet the requirements for the comfort of head restraint for people of different heights and different levels.

In this embodiment, the materials of the elastic pillow back 2 include PVC, ABS, lead stearate, thermoplastic polyurethane elastomer, photocatalyst, nano-silver and compatibilizer, wherein the PVC is used as the main material of soft plastics, and ABS is used as an auxiliary material to adjust the hardness of PVC. These two materials are diluted with a compatibilizer to form a mixture. The proportions of the PVC, ABS, lead stearate, thermoplastic polyurethane elastomer, photocatalyst, nano-silver and compatibilizer are 1:0.1:0.45:2:0.01:0.2:3 respectively.

The manufacturing method of the above-mentioned elastic pillow back 2 is as follows: I. Put 1 portion of PVC, 0.1 portion of ABS and 3 portions of compatibilizer into a blender and stir to form a mixture. In this embodiment, the compatibilizer can be maleic anhydride graft, which mainly includes maleic anhydride graft ABS (ABS-g-MAH), maleic anhydride graft PE (PE-g-MAH), maleic anhydride graft PP (PP-g-MAH), maleic anhydride graft PS (SMA), etc. The compatibilizing mechanism of this type of compatibilizer is that the maleic anhydride group in the compatibilizer is esterified with the terminal hydroxyl group of the PC resin to form a graft, which can link PVC and ABS through chemical bonds to fuse them and adjust the properties of each other; add 2 portions of thermoplastic polyurethane elastomer to the above mixture. The thermoplastic polyurethane elastomer has high modulus, high growth rate, high elasticity and polarity, which can improve the elasticity of the entire mixture. It can stick with ABS through strong polarity to neutralize the hardness of ABS and make the mixture present a controllable state of tension and relaxation; add 0.45 portion of lead stearate and 0.01 portion of photocatalyst to the mixture formed in step 2. Photocatalyst can kill bacteria. It is a general term for a photo-semiconductor material with photocatalytic function represented by nanoscale titanium dioxide. Under the action of ultraviolet and visible light, it produces a strong catalytic degradation effect: it can effectively degrade toxic and harmful gases in the air; kill a variety of bacteria, and decompose and harmlessly treat toxins released by bacteria or fungi; meanwhile, it also has such functions as removing formaldehyde, deodorization, anti-fouling, and purifying air, preventing the elastic pillow back 3 from being easily moldy. The lead stearate is used as a stabilizer for PVC, and its molecular formula is C36H70O4Pb, wherein the lead can provide a positive electrode for the nano-silver in the next step, generating a cell reaction and increasing the adsorption of nano-silver; plate the outside of the mixture formed in step 3 with nano-silver and finally form the shape. The particle size of nano-silver is mostly around 25 nanometers. It has strong inhibitory and killing effects on dozens of pathogenic microorganisms such as escherichia coli, neisseria gonorrhoeae, and chlamydia trachomatis, and does not produce drug resistance, thus increasing the antibacterial and antioxidant properties of the entire elastic pillow back.

In this embodiment, an intermediate bracket 4 is provided between the first bracket 1 and the second bracket 3. The intermediate bracket 4 is fixed on the first bracket 1, the second bracket 3 is slidably connected with the intermediate bracket 4, the first bracket 1 has a fixed tab 5 passing through the intermediate bracket 4, and the second bracket 3 has a row of first through holes 6 to be buckled with the tab 5. A movable slot 7 of the second bracket 3 is provided in the middle of the intermediate bracket 4, two inserted plates 8 are respectively provided on the inner side of the movable slot 7, and the two sides of the second bracket 3 are respectively provided with a movable groove 9 for the inserted plates 8, which can prevent the stroke of the second bracket 3 from deviating during sliding. When the length of the elastic pillow back 2 needs to be adjusted, the second bracket 3 is moved in the movable slot 7, and the tab 5 passes through the surface of the first through hole 6 and enters one of the first through holes 6 to fix the second bracket 3, so as to fix the length of the elastic pillow back 2.

Preferably, the head of the tab 5 is spherical and a spring is provided inside the head to help the tab 5 enter the first through hole 6.

Preferably, an avoidance space 10 is formed between the first bracket 1 and intermediate bracket 4 for engaging the chair back. The intermediate bracket 4 is provided with two parallel slots 11 on the sides of the avoidance space 10, which can be used to fix the chair back.

To support the travel path of the second bracket 3, the intermediate bracket 4 is also provided with two second through holes 12, and the second bracket 4 is provided with a vertical groove 13 corresponding to the second through holes 12 respectively. The chair back passes through the second through hole 12 through the bolts and snaps into the vertical groove 13, which can provide a travel path for the second bracket 4. In combination with the inserted plate 8 and the movable groove 9 above, the travel path is more determined and the service life of the second bracket 4 is increased.

In order to fix the elastic pillow back 2 to the second bracket 3 more stably, three steps 13 are provided in the place where the elastic pillow back 2 is in contact with the second bracket 3. The top of the three steps 13 is provided with a row of clamping slots 14, the elastic pillow back 2 is provided with fitting steps 15 corresponding to the three steps 13, and the ceiling of the fitting steps 15 is provided with a projection 16 corresponding to the clamping slot 14. When the projection 16 enters the clamping slot 14, the top surface of the second bracket 3 and the top surface of the elastic pillow back 2 are straight.

The above embodiments are good practices of the invention; however, the practice of the invention is not restricted by the above embodiments, and any other changes, modifications, replacements, combinations and simplifications within the spirit and principles of the invention shall be regarded as equivalent replacement and included in the protection scope of the invention.

## Claims

1. A head restraint is **characterized by** comprising: a first bracket, a second bracket, and an elastic pillow back arranged side by side. The first bracket is connected to one side of the elastic pillow back, and the second bracket is connected to the other side of the elastic pillow back. The elastic pillow back is made of soft plastic, and the first bracket or/and the second bracket is/are fixed on the chair back.

2. The head restraint as claimed in Claim 1 is **characterized in that** the first bracket is fixed on the chair back, and the second bracket can slide relative to the first bracket and adjust the length of the elastic pillow back.

3. The head restraint as claimed in Claim 1 is **characterized in that** the materials of the elastic pillow back include PVC, ABS, lead stearate, thermoplastic polyurethane elastomer, photocatalyst, nano-silver and compatibilizer.

4. The head restraint as claimed in Claim 3 is **characterized in that** the proportions of the PVC, ABS, lead stearate, thermoplastic polyurethane elastomer, photocatalyst, nano-silver and compatibilizer are 1:0.1:0.45:2:0.01:0.2:3 respectively.

5. The head restraint as claimed in Claim 4 is **characterized in that** the manufacturing method of the elastic pillow back is as follows:
I. Put 1 portion of PVC, 0.1 portion of ABS and 3 portions of compatibilizer into a blender and stir to form a mixture;
II. Add 2 portions of thermoplastic polyurethane elastomer to the above mixture;
III. Add 0.45 portion of lead stearate and 0.01 portion of photocatalyst to the mixture formed in step 2;
IV. Plate the outside of the mixture formed in step 3 with nano-silver and finally form the shape.

6. The head restraint as claimed in Claim 1 is **characterized in that** an intermediate bracket is provided between the first bracket and the second bracket. The intermediate bracket is fixed on the first bracket, the second bracket is slidably connected with the intermediate bracket, the first bracket has a fixed tab passing through the intermediate bracket, and the second bracket has the first through holes to be buckled with the tab.

7. The head restraint as claimed in Claim 6 is **characterized in that** a movable slot of the second bracket is provided in the middle of the intermediate bracket, two inserted plates are respectively provided on the inner side of the movable slot, and the two sides of the second bracket are respectively provided with a movable groove for the inserted plates.

8. The head restraint as claimed in Claim 6 is **characterized in that** an avoidance space is formed between the first bracket and intermediate bracket for engaging the chair back, and the intermediate bracket is provided with two parallel slots on the sides of the avoidance space; the intermediate bracket is also provided with two second through holes, and the second bracket is provided with a vertical groove corresponding to the second through holes respectively.

9. The head restraint as claimed in Claim 6 is **characterized in that** the head of the tab is spherical, and a spring is provided inside the head.

10. The head restraint as claimed in Claim 1 is **characterized in that** three steps are provided in the place where the elastic pillow back is in contact with the second bracket. The top of the three steps is provided with a row of clamping slots, the elastic pillow back is provided with fitting steps corresponding to the three steps, and the ceiling of the fitting steps is provided with a projection corresponding to the clamping slot.
